# EUROPÄISCHE PATENTANMELDUNG

(11) **EP 2 072 838 A2**
(43) Veröffentlichungstag der Anmeldung: **24.06.2009**
(21) Anmeldenummer: 08105896.8
(22) Anmeldetag: 01.12.2008
(51) Int. Cl.: F16B 13/14

(54) **Ankerrohr für einen Injektionsbefestigungsanker**

(30) Priorität: 20.12.2007 DE 102007055893
(71) Anmelder: HILTI Aktiengesellschaft, 9494 Schaan (LI)
(72) Erfinder: Herbert, Ginter, 87600, Kaufbeuren (DE); Plockross, Christian, 80337, München (DE); Reuter, Martin, 86830 Schwabmünchen-Mittelstetten (DE)

(57) **Zusammenfassung**

Ein Ankerrohr (12) für einen Injektionsbefestigungsanker (11) für die Befestigung eines Vormauerwerks (5) an einem Tragmauerwerk (6) weist eine Durchführöffnung (13) zur Aufnahme eines Befestigungselementes (8) sowie an zumindest einem ersten Ende (14) des Ankerrohres (12) wenigstens ein erstes Kupplungsmittel (32) für die Festlegung eines weiteren Elementes des Injektionsbefestigungsankers (11) an dem Ankerrohr (12) auf.

## Beschreibung

Die Erfindung betrifft ein Ankerrohr für einen Injektionsbefestigungsanker für die Befestigung eines Vormauerwerks an einem Tragmauerwerk mit einer Durchführöffnung zur Aufnahme eines Befestigungselementes.

Injektionsbefestigungsanker werden nach dem Aufmauern des zweischaligen Mauerwerks üblicherweise durch eine Fuge im Vormauerwerk, auch Vormauerschale oder Verblendmauerwerk genannt, gesetzt und übertragen die auf das Vormauerwerk wirkende Zug- und Druckkräfte auf das Tragmauerwerk, auch Tragschale genannt. Eine häufige Anwendung eines derartigen Injektionsbefestigungsanker stellt die nachträgliche Wiederverbindung eines zweischaligen Mauerwerks dar, bei dem die kraftschlüssige Verbindung der beiden Mauerwerke miteinander aufgrund von Korrosion der beim Erstellen des zweischaligen Mauerwerks eingemauerten Verbinder nicht mehr gegeben ist.

Aus der DE 30 04 276 A1 ist ein Ankerrohr für einen Injektionsbefestigungsanker bekannt, der eine Durchführöffnung zur Aufnahme eines Befestigungselementes aufweist. Das Ankerrohr kann im Bereich seiner Enden jeweils mit radialen Öffnungen versehen sein. Zum Setzen des Injektionsbefestigungsankers wird zuerst eine Bohrung durch das Vormauerwerk und die zwischen dem Vormauerwerk und dem Tragmauerwerk befindliche Luftschicht in das Tragmauerwerk erstellt. Anschliessend wird das Ankerrohr in die erstellte Bohrung eingeführt. Dann wird durch die Durchführöffnung des Ankerrohres hindurch Injektionsmörtel in den Injektionsbefestigungsanker eingebracht. Beim Einführen eines Befestigungselementes wird der eingebrachte Injektionsmörtel an den Enden des Ankerrohres nach aussen gepresst. Die Länge des umfänglich geschlossenen Abschnitts des Ankerrohres ist derart gewählt, dass dieser die Luftschicht überbrückt.

Nachteilig an der bekannten Lösung ist, dass in der Praxis verschiedene zweischalige Mauerwerke mit unterschiedlichsten Stein- und Luftschichtbreiten erstellt werden und daher eine Vielzahl von unterschiedlich ausgebildeten Ankerrohre dem Anwender zur Verfügung gestellt werden müssen, um die Vorteile eines derartigen Injektionsbefestigungsankers zu gewährleisten.

Aus der DE 102 22 799 A1 sind Siebhülsen mit netzförmigen radialen Wandabschnitten und mit Kupplungseinrichtungen an ihren Enden bekannt, wobei mehrere Siebhülsen zu einem Dübelkörper zusammensetzbar sind. Nach dem Setzen eines derartigen Dübelkörpers in einem Bohrloch wird dieser mit einem Injektionsmörtel befüllt und anschliessend ein Befestigungselement eingeführt, wobei der Injektionsmörtel kontrolliert aus den netzförmigen radialen Wandabschnitten austritt.

Aufgabe der Erfindung ist es, ein Ankerrohr für einen Injektionsbefestigungsanker für die Befestigung eines Vormauerwerks an einem Tragmauerwerk zu schaffen, so das ein Injektionsbefestigungsanker mit einem derartigen Ankerrohr für verschiedene Arten und Ausgestaltungen von zweischaligen Mauerwerken geeignet ist.

Die Aufgabe ist durch die Merkmale des unabhängigen Anspruchs gelöst. Vorteilhafte Weiterbildungen sind in den Unteransprüchen dargelegt.

Gemäss der Erfindung ist an zumindest einem ersten Ende des Ankerrohres wenigstens ein erstes Kupplungsmittel für die Festlegung eines weiteren Elementes des Injektionsbefestigungsankers an dem Ankerrohr vorgesehen.

In Abhängigkeit von der Breite der Luftschicht beziehungsweise des Abstandes zwischen dem Vormauerwerk und dem Tragmauerwerk beziehungsweise der Mauerwerksschalen eines zwei- oder mehrschaligen Mauerwerks zueinander wird ein entsprechend langes Ankerrohr gewählt und über das Kupplungsmittel mit einem weiteren Element zu einem Injektionsbefestigungsanker zusammengeführt, wobei das weitere Element ein entsprechend des Kupplungsmittels ausgebildetes Gegenkupplungsmittel aufweist. Das mit dem Ankerrohr kuppelbare weitere Element ist beispielsweise eine entsprechend der Bohrlochtiefe in dem Tragmauerwerk ausgebildete Siebhülse. Das erfindungsgemässe Ankerrohr ist beispielsweise mit Siebhülsen kuppelbar, wie sie aus der DE 102 22 799 A1 bekannt sind.

Unterschiedliche Längen oder Arten von Ankerohren und/oder unterschiedliche Längen oder Arten von Siebhülsen sind bedarfsweise und auch direkt auf der Baustelle vom Anwender miteinander zu einem Injektionsbefestigungsanker für die Befestigung eines Vormauerwerks an einem Tragmauerwerk kombinierbar. Der Injektionsbefestigungsanker ist mit dem erfindungsgemässen Ankerrohr modular. Mit einer geringen Anzahl von unterschiedlich ausgebildeten Ankerrohren und Siebhülsen lässt sich eine Vielzahl von unterschiedlichen Konstruktionen von zweischaligen Mauerwerken nachträglich sichern. Dabei ist der Injektionsbefestigungsanker einfach und schnell an die aktuellen bauseitigen Anwendungsbedingungen, wie beispielsweise Steinart, -dicke oder -qualität des Trag- oder Vormauerwerks und der Luftschichtweite anpassbar.

Vorzugsweise ist an einem dem ersten Ende gegenüberliegenden zweiten Ende des Ankerrohres ein zweites Kupplungsmittel für die Festlegung eines weiteren Elementes des Injektionsbefestigungsankers an dem Ankerrohr vorgesehen. Damit sind beispielsweise mehrere erfindungsgemässe Ankerrohre miteinander kuppelbar um einen entsprechend grossen Abstand zwischen dem Vormauerwerk und dem Tragmauerwerk beziehungsweise einer sehr breiten Luftschicht zu überbrücken. Weiter kann an dem zweiten Ende eine Siebhülse angekuppelt werden, die im gesetzten Zustand des Injektionsbefestigungsankers im Vormauerwerk zu liegen kommt. Damit ist eine verbesserte Verankerung des Injektionsbefestigungsankers im Vormauerwerk gewährleist, da durch diese Siebhülse eine gezielte Verankerung auch im Bereich des Vormauerwerks möglich ist. Insbesondere wenn das Vormauerwerk Fugen mit schlechter Vermörtelungsqualität aufweist, ist ein derartiger Injektionsbefestigungsanker vorteilhaft. Besonders vorteilhaft ist an beiden Enden eines Ankerrohrs jeweils eine Siebhülse vorgesehen.

An den freien Enden der mit dem erfindungsgemässen Ankerrohr kuppelbaren Siebhülsen können zudem weitere Kupplungs- beziehungsweise Gegenkupplungsmittel vorgesehen sein, die eine Kupplung weiterer Siebhülsen an den bereits an dem Ankerrohr angekuppelten Siebhülsen ermöglichen.

Bevorzugt umfassen die Kupplungsmittel Rastnasen, die mit als Rastausnehmungen ausgebildeten Gegenkupplungsmittel zu einer Kupplungseinrichtung zusammenführbar sind. Die Rastnasen weisen vorteilhaft jeweils einen von der Aussenkontur ansteigenden Abschnitt auf, der ein einfaches Zusammenführen der Elemente des Injektionsbefestigungsankers gewährleistet. Vorteilhaft fallen die Rastnasen jeweils anschliessend an den ansteigenden Abschnitt senkrecht zur Aussenkontur des Teils ab, so dass jeweils ein vorteilhafter Hinterschnitt mit einem Randbereich der Rastausnehmungen im zusammengeführten Zustand der Elemente gegeben ist.

In einer alternativen Ausführungsform umfassen die Kupplungsmittel mit Rastnasen zusammenführbare Rastausnehmungen, die ein einfaches und sicheres Zusammenführen der Elemente des Injektionsbefestigungsankers gewährleisten, wobei die Rastausnehmungen einfach zu fertigen sind.

Vorteilhaft sind an einem Ende des Ankerrohres Rastnasen und an dem anderen Ende des Ankerrohres Rastausnehmungen vorgesehen, womit mehrere erfindungsgemässe Ankerrohre einfach miteinander kuppelbar sind.

Vorzugsweise sind an einem Ende des Ankerrohres jeweils mehrere Kupplungsmittel vorgesehen, die mit mehreren Gegenkupplungsmittel zusammenführbar sind. Durch die zwischen den Elementen gebildete Kupplungseinrichtung ist eine sichere Verbindung der Elemente des Injektionsbefestigungsankers miteinander gewährleistet.

Bevorzugt sind die mehreren Kupplungsmittel an einem Ende des Ankerrohres umfänglich rotationssymmetrisch gleichmässig verteilt angeordnet, wobei vorteilhaft die mehreren Gegenkupplungsmittel an den mit dem Ankerrohr kuppelbaren Elementen ebenfalls umfänglich rotationssymmetrisch gleichmässig verteilt angeordnet sind. Damit ist zusätzlich eine sichere Verbindung zwischen den Elementen des Injektionsbefestigungsankers gewährleistet.

Vorzugsweise sind an einem Ende des Ankerrohres jeweils zumindest drei Kupplungsmittel vorgesehen, wobei vorteilhaft an einem Ende der mit dem Ankerrohr zusammenführbaren Elemente des Injektionsbefestigungsankers jeweils die gleiche Anzahl von Gegenkupplungsmitteln wie Kupplungsmittel vorgesehen ist. Damit kann beispielsweise eine bestimmte Ausrichtung der Elemente des Injektionsbefestigungsankers zueinander gewährleistet werden. Das mit dem Ankerrohr zusammenführbare Element des Injektionsbefestigungsankers weist vorteilhaft die gleiche Anzahl von Gegenkupplungsmitteln beziehungsweise von Kupplungsmitteln auf.

Vorteilhaft ist das Ankerrohr aus einem Kunststoff gefertigt. Weiter vorteilhaft ist eine mit dem Ankerrohr kuppelbare Siebhülse zumindest bereichsweise ebenfalls aus einem Kunststoff gefertigt. Besonders vorteilhaft sind alle Elemente des Injektionsbefestigungsankers aus einem Kunststoff in einem Spritzgussverfahren hergestellt, das eine einfache Ausbildung der Kupplungseinrichtungen ermöglicht.

Die Erfindung wird nachstehend anhand von Ausführungsbeispielen näher erläutert. Es zeigen:
- Fig. 1: Ein erstes Ausführungsbeispiel eines Injektionsbefestigungsankers im gesetzten Zustand in einem Schnitt;
- Fig. 2: das erfindungsgemässe Ankerrohr für einen Injektionsbefestigungsanker in Seitenansicht;
- Fig. 3: eine erste Siebhülse des Injektionsbefestigungsankers in Seitenansicht]
- Fig. 4: eine zweite Siebhülse des Injektionsbefestigungsankers in Seitenansicht; und
- Fig.5: ein zweites Ausführungsbeispiel eines Injektionsbefestigungsankers in Seitenansicht.

Grundsätzlich sind in den Figuren gleiche Teile mit den gleichen Bezugszeichen versehen.

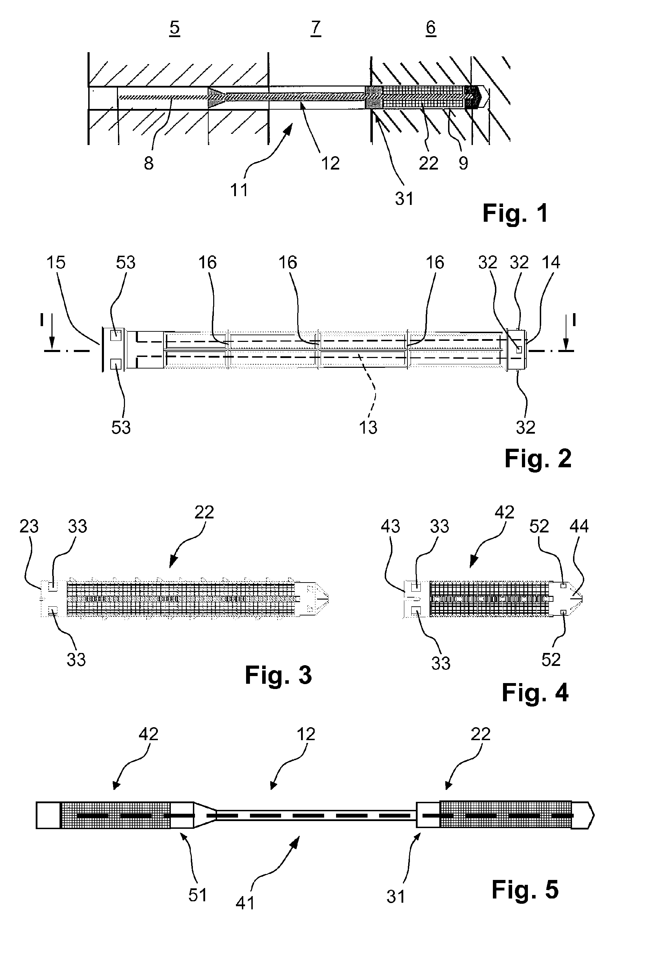

Der in der Figur 1 als Ganzes und in den Figuren 2 und 3 in Einzelteilen dargestellte Injektionsbefestigungsanker 11 umfasst ein erfindungsgemässes, eine Durchführöffnung 13 aufweisendes Ankerrohr 12 zur Aufnahme eines Befestigungselementes 8 und eine mit dem Ankerrohr 12 gekuppelte Siebhülse 22. Die Siebhülse 22 ist über eine erste Kupplungseinrichtung 31 mit dem Ankerrohr 12 gekuppelt.

Für die Befestigung eines Vormauerwerks 5 an einem Tragmauerwerk 6 wird durch eine Fuge des Vormauerwerks 5 und die Luftschicht 7 hindurch ein Bohrloch 9 in dem Tragmauerwerk 6 erstellt. Nach dem Reinigen des Bohrlochs 9 wird der modular zusammengesetzte Injektionsbefestigungsanker 11 mit der Siebhülse 22 voran eingeführt, bis die Siebhülse 22 im Bohrloch 9 zu liegen kommt. Dann wird der Injektionsbefestigungsanker 11 mit Injektionsmörtel befüllt und anschliessend das Befestigungselement 8, z. B. eine abgelängte Gewindestange, durch die Durchführöffnung 13 des Ankerrohres 12 in den Injektionsbefestigungsanker 11 eingeführt. Dabei wird Injektionsmörtel insbesondere im Bereich der Siebhülse 22 ausgebracht und der Injektionsbefestigungsanker 11 sicher im Tragmauerwerk 6 verankert. Die Verankerung im Vormauerwerk 5 erfolgt vorteilhaft durch anschliessendes Füllen beziehungsweise Verpressen des Raumes zwischen dem Injektionsbefestigungsanker 11 beziehungsweise dem Befestigungselement 8 und dem Vormauerwerk 5.

Das in Figur 2 dargestellte erfindungsgemässe Ankerrohr 12 weist neben der Durchführöffnung 13 an einem ersten Ende 14 als ein erstes Kupplungsmittel 32 vier umfänglich rotationssymmetrisch gleichmässig verteilte Rastnasen und an einem dem ersten Ende 14 gegenüberliegenden zweiten Ende 15 als ein zweites Kupplungsmittel 53 vier umfänglich rotationssymmetrisch gleichmässig verteilt angeordnete Rastausnehmungen auf. Weiter sind an dem Ankerrohr 12 aussenseitig umlaufende Ringe 16 als Kondensat-Abtropfringe vorgesehen, die einen Kondensatfluss von dem Vormauerwerk 5 zum Tragmauerwerk 6 entlang des Ankerrohres 12 im gesetzten Zustand des Injektionsbefestigungsankers 11 verhindern.

Die in der Fig. 3 gezeigte Siebhülse 22 weist an einem ersten Ende 23 ein mit dem ersten Kupplungsmittel 32 an dem Ankerrohr 12 zusammenführbares erstes Gegenkupplungsmittel 33 auf, das analog dem zweiten Kupplungsmittel 53 an dem Ankerrohr 12 als vier umfänglich rotationssymmetrisch gleichmässig verteilte Rastausnehmungen ausgebildet ist.

Die in der Fig. 4 gezeigte Siebhülse 42 ist im Gegensatz zu der in Figur 3 gezeigten Siebhülse 22 in ihrer Längserstreckung kürzer ausgebildet. Weiter weist die Siebhülse 42 an einem dem ersten Ende 43 gegenüberliegenden zweiten Ende 44 vier umfänglich rotationssymmetrisch gleichmässig verteilte Rastnasen als ein zweites Gegenkupplungsmittel 52 auf.

In der Figur 5 ist ein modular zusammengesetzter Injektionsbefestigungsanker 41 dargestellt, der an dem ersten Ende 14 des erfindungsgemässen Ankerrohres 12 die Siebhülse 22 und am zweiten Ende 15 des erfindungsgemässen Ankerrohres 12 die Siebhülse 42 aufweist. Die Siebhülse 22 ist über die Kupplungseinrichtung 31 und die Siebhülse 42 ist über die Kupplungseinrichtung 51 an dem Ankerrohr 12 festgelegt, wobei die Kupplungseinrichtung 51 von dem zweiten Kupplungsmittel 53 an dem zweiten Ende 15 des Ankerrohres 12 und dem mit dem zweiten Kupplungsmittel 53 zusammenführbares Gegenkupplungsmittel 52 an der Siebhülse 42 gebildet ist. Im gesetzten Zustand des zusammengesetzten Injektionsbefestigungsankers 41 kommt die Siebhülse 42 in dem Vormauerwerk 5 und die Siebhülse 22 wie beim zuvor beschriebenen Injektionsbefestigungsanker 11 in dem Tragmauerwerk 6 zu liegen.

## Patentansprüche

1. Ankerrohr für einen Injektionsbefestigungsanker für die Befestigung eines Vormauerwerks (5) an einem Tragmauerwerk (6) mit einer Durchführöffnung (13) zur Aufnahme eines Befestigungselementes (8), **dadurch gekennzeichnet, dass**
an zumindest einem ersten Ende (14) des Ankerrohres (12) wenigstens ein erstes Kupplungsmittel (32) für die Festlegung eines weiteren Elementes des Injektionsbefestigungsankers (11) an dem Ankerrohr (12) vorgesehen ist.

2. Ankerrohr nach Anspruch 1, **dadurch gekennzeichnet, dass** an einem dem ersten Ende (14) gegenüberliegenden zweiten Ende (15) des Ankerrohrs (12) ein zweites Kupplungsmittel (53) für die Festlegung eines weiteren Elementes des Injektionsbefestigungsankers (11) an dem Ankerrohr (12) vorgesehen ist.

3. Ankerrohr nach Anspruch 1 oder 2, **dadurch gekennzeichnet, dass** die Kupplungsmittel (32) Rastnasen umfassen.

4. Ankerrohr nach Anspruch 1 oder 2, **dadurch gekennzeichnet, dass** die Kupplungsmittel (53) mit Rastnasen zusammenführbare Rastausnehmungen umfassen.

5. Ankerrohr nach einem der Ansprüche 1 bis 4, **dadurch gekennzeichnet, dass** an einem Ende (14, 15) des Ankerrohres (12) jeweils mehrere Kupplungsmittel (32; 53) vorgesehen sind.

6. Ankerrohr nach Anspruch 5, **dadurch gekennzeichnet, dass** die mehreren Kupplungsmittel (32; 53) an einem Ende (14, 15) des Ankerrohres (12) umfänglich rotationssymmetrisch gleichmässig verteilt angeordnet sind.

7. Ankerrohr nach Anspruch 5 oder 6, **dadurch gekennzeichnet, dass** an einem Ende (14, 15) des Ankerrohres (12) jeweils zumindest drei Kupplungsmittel (32; 53) vorgesehen sind.
